# EUROPÄISCHE PATENTSCHRIFT

(11) **EP 1 258 391 B1**
(45) Veröffentlichungstag und Bekanntmachung des Hinweises auf die Patenterteilung: **03.09.2008**
(21) Anmeldenummer: 02008886.0
(22) Anmeldetag: 20.04.2002
(51) Int. Cl.: B60N 3/10

(54) **Getränkehalter für eine taillierte Flasche**
Beverage holder for a shaped bottle
Support de boisson pour une bouteille profilée

(30) Priorität: 16.05.2001 DE 20108250 U
(43) Veröffentlichungstag der Anmeldung: 20.11.2002
(73) Patentinhaber: fischerwerke GmbH & Co. KG, 72178 Waldachtal (DE)
(72) Erfinder: Kaupp, Klaus, 72178 Waldachtal (DE); Schaal, Falk, 72275 Alpirsbach (DE)

(56) Entgegenhaltungen:
- EP-A- 0 663 318
- EP-A- 1 074 428
- DE-A- 19 724 599
- DE-A- 19 729 689
- US-A- 5 782 448
- US-A- 5 839 711
- PATENT ABSTRACTS OF JAPAN vol. 1998, no. 09, 31. Juli 1998 (1998-07-31) & JP 10 086734 A (INOAC CORP), 7. April 1998 (1998-04-07)

## Beschreibung

Die Erfindung betrifft einen Getränkehalter für eine taillierte Flasche mit den Merkmalen des Oberbegriffs des Anspruchs 1. Der Getränkehalter ist für den Einbau in einen Kraftwagen vorgesehen.

Getränkehalter für den Einbau in Kraftwagen sind an sich bekannt. Sie weisen eine Einstellöffnung zum Einstellen eines Getränkebehälters wie beispielsweise eine Tasse, einen Becher oder eine Getränkedose auf. Zur Anpassung an unterschiedliche Durchmesser von Getränkebehältern ist es bekannt, eine in die Einstellöffnung hineinschwenkbare Durchmesserausgleichsklappe vorzusehen, die von einem Federelement beaufschlagt ist und von diesem in die Einstellöffnung hineinverschwenkt wird. Beim Einstellen eines Getränkebehälters in die Einstellöffnung wird die Durchmesserausgleichsklappe vom Getränkebehälter gegen die Kraft des Federelements nach außen gedrückt. Die Durchmesserausgleichsklappe liegt federbeaufschlagt an dem in die Einstellöffnung eingestellten Getränkebehälter an um den Getränkebehälter kippsicher abzustützen.

Aus der US 5 782 448 ist ein Getränkehalter entsprechend dem Oberbegriff des Anspruchs 1 bekannt.

Die bekannten Durchmesserausgleichsklappen eignen sich für im Wesentlichen zylindrische oder konische Getränkebehälter wie die bereits genannten Tassen, Becher oder Getränkedosen. Wird eine taillierte Flasche in einen solchen Getränkehalter eingestellt, tritt das Problem auf, dass entweder die Durchmesserausgleichsklappe einen Abstand von der taillierten Stelle der Flasche aufweist und deswegen die eingestellte Flasche nicht kippsicher hält oder dass die taillierte Flasche nicht aus der Einstellöffnung heraushebbar ist, weil die Durchmesserausgleichsklappe beim Versuch, die Flasche aus der Einstellöffnung herauszuheben, nicht nach außen ausweicht.

Unter taillierter Flasche soll eine eine Durchmesserverjüngung oberhalb ihres Bodens aufweisende Flasche verstanden werden. Die Durchmesserverjüngung befindet sich bei in die Einstellöffnung eingestellter Flasche etwa in Höhe der Durchmesserausgleichsklappe. Die Taillierung ist üblicherweise konkav gewölbt, zwischen Taillierung und Flaschenboden weist die Flasche, üblicherweise durch eine ballige Form in diesem Bereich, einen größeren Durchmesser als im Bereich der Taillierung auf. Außer taillierten Flaschen kommen selbstverständlich auch sonstige, in vorstehend erläutertem Sinne taillierte Getränkebehälter in Betracht.

Der Erfindung liegt die Aufgabe zu Grunde, einen Getränkehalter der vorstehend erläuterten Art so auszubilden, dass eine taillierte Flasche zuverlässig gegen Kippen gehalten und problemlos aus dem Getränkehalter herausgenommen werden kann.

Diese Aufgabe wird erfindungsgemäß durch die Merkmale des Anspruchs 1 gelöst. Der erfindungsgemäße Getränkehalter weist ein Durchmesserausgleichselement auf, das nach unten und nach oben schwenkbar ist. Mit nach unten ist dabei in Einstellrichtung der Flasche und mit nach oben in Richtung eines Heraushebens der Flasche aus dem Getränkehalter gemeint. Nach unten und nach oben bezieht sich insbesondere auf eine vorgesehene Einbaulage des Getränkehalters. Beim Einstellen einer taillierten Flasche in den erfindungsgemäßen Getränkehalter drückt die Flasche das Durchmesserausgleichselement gegen die Kraft des Federelements nach unten und zugleich nach außen. Ist die Flasche eingestellt, schwenkt das Federelement das Durchmesserausgleichselement, das in Höhe der Taillierung der Flasche angeordnet ist, nach innen, wodurch die Flasche kippsicher in der Einstellöffnung des Getränkehalters gehalten ist. Beim Herausheben der Flasche bewegt diese auf Grund ihres von der taillierten Stelle nach unten zum Flaschenboden größer werdenden Durchmessers das Durchmesserausgleichselement gegen die Kraft des Federelements nach oben und zugleich nach außen. Eine taillierte Flasche ist wegen der Schwenkbarkeit des Durchmesserausgleichselements nach oben problemlos aus dem erfindungsgemäßen Getränkehalter heraushebbar, insbesondere hält das Durchmesserausgleichselement die in den Getränkehalter eingestellte taillierte Flasche beim Herausheben nicht an einer Stelle größeren Durchmessers zwischen der taillierten Stelle und dem Flaschenboden im Getränkehalter.

Vorzugsweise weist der erfindungsgemäße Getränkehalter mehrere Durchmesserausgleichselemente auf, die gleich- oder ungleichmäßig über den Umfang verteilt angeordnet sind. Dabei beaufschlagt bei einer Ausgestaltung der Erfindung ein Federelement mehrere oder alle Durchmesserausgleichselemente. So kann beispielsweise eine feder in ihrer Mitte zwischen zwei Durchmesserausgleichselementen befestigt sein, die sie beide in die Einstellöffnung des Getränkehalters hineinschwenkt. Auch ist es möglich, dass ein Federelement ringförmig ausgebildet ist und alle Durchmesserausgleichselemente beaufschlagt. Das Federelement kann beispielsweise ein ringförmiger, die Durchmesserausgleichselemente umschließender Federdraht oder eine ringförmige Blattfeder sein. In beiden Fällen bildet das Federelement einen offenen Ring, der nicht notwendigerweise kreisförmig ist. Auch kann das Federelement ein elastischer und geschlossener Ring, beispielsweise ein Gummiring sein. Eine Ausgestaltung der Erfindung sieht für jedes Durchmesserausgleichselement ein Federelement vor.

Die Erfindung wird nachfolgend anhand zweier in der Zeichnung dargestellter Ausführungsbeispiele näher erläutert. Es zeigen:
- Figuren 1a bis c: einen erfindungsgemäßen Getränkehalter in perspektivischer Darstellung in unterschiedlichen Stellungen;
- Figuren 2a bis c: eine Schnittdarstellung des Getränkehalters aus Figur 1 entlang Linie II-II in Figur 1a in den Figuren 1a bis c entsprechenden Stellungen;
- Figur 3 a bis c: eine zweite Ausführungsform eines erfindungsgemäßen Getränkehalters in Figuren 1a bis c entsprechenden Stellungen; und
- Figuren 4a - c: eine Schnittdarstellung des Getränkehalters aus Figur 3 entlang Linie IV-IV in Figur 3a in Figuren 3a bis c entsprechenden Stellungen.

Die Zeichnung ist als vereinfachte und schematisierte Darstellung zu verstehen.

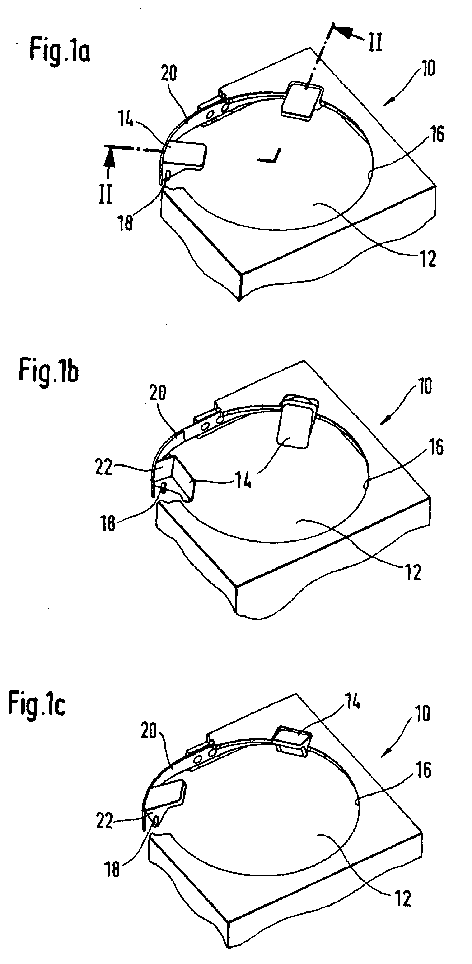

Der in Figur 1a dargestellte, erfindungsgemäße Getränkehalter 10 weist eine kreisförmige Einstellöffnung 12 zum Einstellen eines Getränkebehälters auf. Der Getränkehalter 10 weist zwei Durchmesserausgleichselemente 14 auf, die als Durchmesserausgleichsklappen 14 ausgebildet sind. Die beiden Durchmesserausgleichsklappen 14 sind im Bereich eines Randes 16 der Einstellöffnung 12 angeordnet, die Durchmesserausgleichsklappen 14 sind um ca. 90° in Umfangsrichtung zueinander versetzt. Die Durchmesserausgleichsklappen 14 weisen zur Seite abstehende Schwenkzapfen 18 auf, die in komplementären Aussparungen des Getränkehalters 10 einliegen. Die Schwenkzapfen 18 definieren horizontale und zum Rand 16 der Einstellöffnung 12 in etwa tangentiale Schwenkachsen der Durchmesserausgleichsklappen 14. Die Durchmesserausgleichsklappen 14 sind nach unten und nach oben schwenkbar.

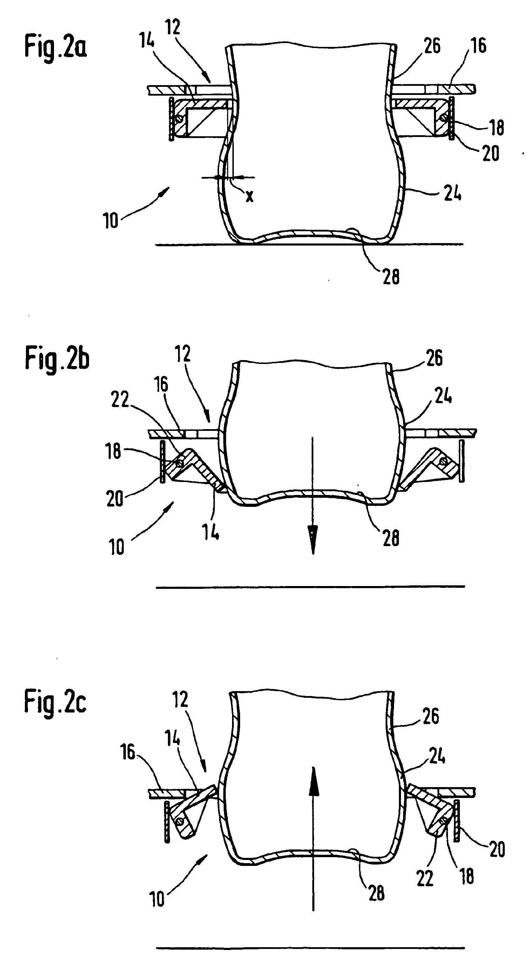

Der erfindungsgemäße Getränkehalter 10 weist ein Federelement 20 auf, das im dargestellten und beschriebenen Ausführungsbeispiel der Erfindung als bogenförmige Blattfeder ausgebildet ist. Die Blattfeder ist unterhalb des Randes 16 der Einstellöffnung 12 angeordnet, sie ist in ihrer Mitte und in einer Mitte zwischen den beiden Durchmesserausgleichsklappen 14 mit dem Getränkehalter 10 verbunden, beispielsweise vernietet. Freie und federnde Enden der das Federelement 20 bildenden Blattfeder liegen unter Vorspannung außen an Außenflächen 22 (Figuren 1b, 2a bis c) an. Das Federelement 20 drückt die beiden Durchmesserausgleichsklappen 14 federelastisch in die Figuren 1a und 2a dargestellte Grundstellung, in der die Durchmesserausgleichsklappen 14 horizontal in die Einstellöffnung 12 hineinstehen.

Der erfindungsgemäße Getränkehalter 10 ist, wie in Figur 2a dargestellt, zum Halten einer taillierten Flasche 24 vorgesehen. Die taillierte Flasche 24 weist eine bogenförmig im Durchmesser verjüngte, taillierte Stelle 26 oberhalb eines Flaschenbodens 28 auf. Unterhalb der taillierten Stelle 26, also zwischen der taillierten Stelle 26 und dem Flaschenboden 28 weist die taillierte Flasche 24 einen größeren Durchmesser auf. Ist die Flasche 24 in die Einstellöffnung 12 des Getränkehalters 10 eingestellt, stehen die beiden Durchmesserausgleichsklappen 14 durch die Beaufschlagung durch das Federelement 20 horizontal in die Einstellöffnung 12 nach innen. Die Durchmesserausgleichsklappen 14 befinden sich in etwa in Höhe der taillierten Stelle 26 der Flasche 24, es besteht ein geringer Abstand x zwischen der taillierten Stelle 26 der Flasche 24 und den Durchmesserausgleichsklappen 14. Die Flasche 24 ist dadurch kippsicher im Getränkehalter 10 gehalten.

Wird die Flasche 24 aus dem Getränkehalter 10 herausgehoben, verschwenkt sie mit ihrem im Durchmesser größeren Bereich zwischen der taillierten Stelle 26 und dem Flaschenboden 28 die Durchmesserausgleichsklappen 14 gegen die Kraft des Federelements 20 nach oben, wie dies in Figur 2c dargestellt ist. Da die Durchmesserausgleichsklappen 14 nach oben schwenkbar sind, behindern sie das Herausheben der taillierten Flasche 24 aus dem erfindungsgemäßen Getränkehalter 10 nicht. Sobald die Flasche 24 vollständig aus dem Getränkehalter 10 herausgehoben ist, schwenkt das Federelement 20, welches von außen gegen die Außenflächen 22 der Durchmesserausgleichsklappen 14 drückt, die Durchmesserausgleichsklappen 14 wieder in ihre horizontale, in Figuren 1a und 2a gezeigte Stellung. Die nach oben geschwenkte, Figur 2c entsprechende Stellung der Durchmesserausgleichsklappen 14 ist in Figur 1c ebenfalls dargestellt, wobei in Figur 1c der klaren Darstellung wegen die Flasche weggelassen ist.

Beim Einstellen der taillierten Flasche 24 in die Einstellöffnung 12 des Getränkehalters 10 schwenkt die Flasche 24 mit ihrem im Durchmesser größeren Bereich zwischen der taillierten Stelle 26 und dem Flaschenboden 28 die Durchmesserausgleichsklappen 14 gegen die Kraft des Federelements 20 nach unten, wie dies in Figur 2b dargestellt ist. Hat der im Durchmesser größere Bereich der Flasche 24 die Durchmesserausgleichsklappen 14 überwunden, schwenkt das von außen gegen die Außenflächen 22 der Durchmesserausgleichsklappen 14 drückende Federelement 20 die Durchmesserausgleichsklappen 14 wieder in die horizontal in die Einstellöffnung 12 nach innen stehende Stellung, die in Figuren 1a und 2a dargestellt ist. Die nach oben geschwenkte Stellung der Durchmesserausgleichsklappen 14 ist ebenfalls in Figur 1c dargestellt, wobei in Figur 1c die Flasche weggelassen ist.

Selbstverständlich können anstatt der taillierten Flasche 24 sonstige, auch nicht taillierte Getränkebehälter wie beispielsweise Becher, Tassen oder Getränkedosen in den erfindungsgemäßen Getränkehalter 10 eingestellt werden.

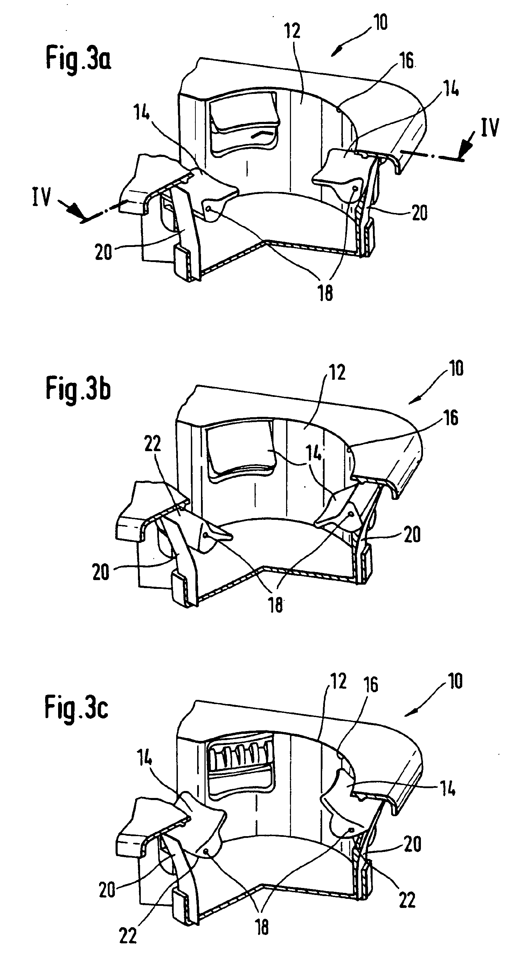

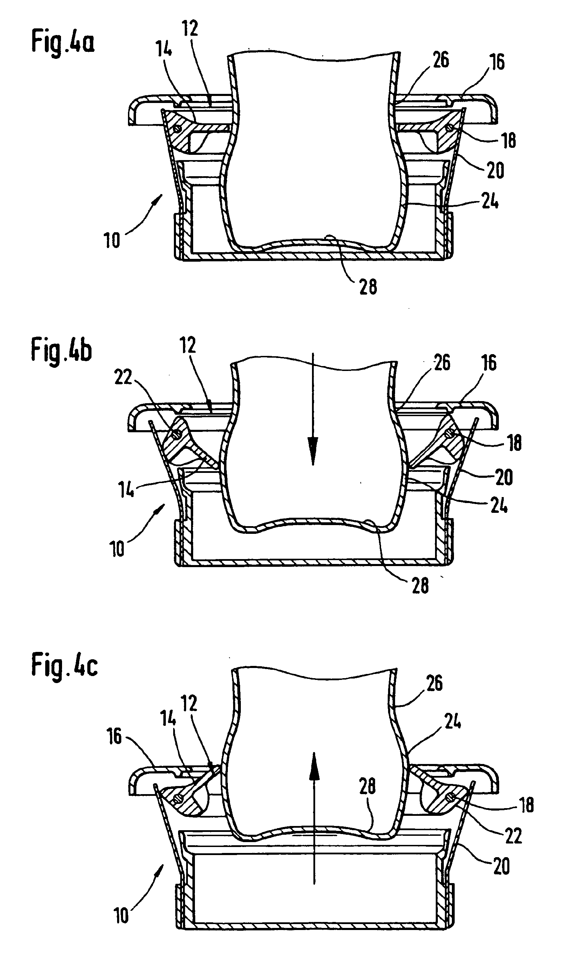

Der in Figuren 3a bis c und 4a bis c dargestellte, erfindungsgemäße Getränkehalter 10 ist im Wesentlichen gleich ausgebildet wie der in Figuren 1a bis c und 2a bis c dargestellte Getränkehalter 10 und funktioniert in gleicher Weise, auch wenn die Durchmesserausgleichsklappen 14 in Seitenansicht eine etwas abweichende Form aufweisen. Zur nachfolgenden Erläuterung des in Figuren 3a bis c und 4a bis c dargestellten Getränkehalters 10. wird deswegen ergänzend auf die Erläuterungen zu Figuren 1a bis c und 2a bis c verwiesen, für gleiche Bauteile werden gleiche Bezugszahlen verwendet.

Der in Figuren 3a bis c und 4a bis c dargestellte Getränkehalter 10 weist drei Durchmesserausgleichsklappen 14 auf, die gleichmäßig über den Umfang verteilt am Rand 16 einer Einstellöffnung 12 angeordnet sind. Mittels seitlich abstehender Schwenkzapfen 18 sind die Durchmesserausgleichslappen 14 um gedachte, zum Rand 16 der Einstellöffnung 12 in etwa tangentiale Schwenkachsen nach oben und unten schwenkbar. Im Unterschied zu dem in Figuren 1a bis c und 2a bis c dargestellten Getränkehalter weist der Getränkehalter 10 aus Figuren 3a bis c und 4a bis c für jede Durchmesserausgleichsklappe 14 ein eigenes Federelement 20 auf. Die Federelemente 20 sind als Blattfedern ausgebildet, sie sind stehend angeordnet und unterhalb der Durchmesserausgleichsklappen 14 fest mit dem Getränkehalter 10 verbunden. Wie auch in Figuren 1a bis c und 2a bis c drücken die als Blattfedern ausgebildeten Federelemente 20 des in Figuren 3a bis c und 4a bis c dargestellten Getränkehalters 10 federnd und mit Vorspannung gegen Außenflächen 22 der Durchmesserausgleichsklappen 14 und drücken dadurch die Durchmesserausgleichsklappen 14 federelastisch in die in Figuren 3a und 4a dargestellte, horizontal in die Einstellöffnung 12 hineinstehende Stellung.

Beim Einstellen einer taillierten Flasche 24 drückt diese die Durchmesserausgleichsklappen gegen die Kraft der Federelemente 20 in die in Figuren 3b und 4b dargestellte, schräg nach unten gerichtete Stellung. Sobald der im Durchmesser größere Bereich der Flasche 24 zwischen deren taillierter Stelle 26 und ihrem Flaschenboden 28 die Durchmesserausgleichsklappen 14 überwunden hat und sich die taillierte Stelle 26 der Flasche 24 in Höhe der Durchmesserausgleichsklappen 14 befindet, schwenken die Federelemente 20 die Durchmesserausgleichsklappen 14 zurück in die horizontale, in die Einstellöffnung 12 hineinstehende Stellung, wie sie in Figuren 3a und 4a dargestellt ist. Die Durchmesserausgleichsklappen 14 halten die in den Getränkehalter 10 eingestellte Flasche 24 an deren taillierter Stelle 26 kippsicher.

Beim Herausheben der Flasche 24 schwenkt deren im Durchmesser größerer Bereich zwischen der taillierten Stelle 26 und dem Flaschenboden 28 die Durchmesserausgleichsklappen 14 gegen die Kraft der Federelemente 20 nach oben, wie in Figuren 3c und 4c dargestellt. Ist die Flasche 24 vollständig aus dem Getränkehalter 10 herausgehoben, schwenken die Federelemente 20 die Durchmesserausgleichsklappen 14 zurück in die horizontale, in die Einstellöffnung 12 hineinstehende Stellung.

## Patentansprüche

1. Getränkehalter für eine taillierte Flasche, mit einer Einstellöffnung zum Einstellen der Flasche, mit einem schwenkbaren Durchmesserausgleichselement, das in die Einstellöffnung hineinschwenkbar ist, und mit einem Federelement, das das Durchmesserausgleichselement in die Einstellöffnung hineinverschwenkt, **dadurch gekennzeichnet, dass** das Durchmesserausgleichselement (14) nach unten end gleichzeitig nach außen und nach oben end gleichzeitig nach außen schwenkbar ist.

2. Getränkehalter nach Anspruch 1, **dadurch gekennzeichnet, dass** der Getränkehalter (10) mehrere Durchmesserausgleichselemente (14) aufweist, die von einem gemeinsamen Federelement (20) in die Einstellöffnung (12) hineinverschwenkt werden.

3. Getränkehalter nach Anspruch 1, **dadurch gekennzeichnet, dass** der Getränkehalter (10) mehrere Durchmesserausgleichselemente (14) und für jedes Durchmesserausgleichselement (14) ein eigenes Federelement (20) aufweist, das das jeweilige Durchmesserausgleichselement (14) in die Einstellöffnung (12) hineinverschwenkt.

4. Getränkehalter nach Anspruch 1, **dadurch gekennzeichnet, dass** das Federelement (20) eine Blattfeder ist.

5. Getränkehalter nach Anspruch 2, **dadurch gekennzeichnet, dass** das Federelement (20) ringförmig ist und die Durchmesserausgleichselemente (14) umschließt.

## Claims

1. Drinks container holder for a waisted bottle, having an insertion opening for insertion of the bottle, having a pivotable diameter-compensating element that can be pivoted into the insertion opening, and having a spring element that pivots the diameter-compensating element into the insertion opening, **characterised in that** the diameter-compensating element (14) is downwardly and simultaneously outwardly, and upwardly and simultaneously outwardly pivotable.

2. Drinks container holder according to claim 1, **characterised in that** the drinks container holder (10) comprises several diameter-compensating elements (14), which are pivoted by a common spring element (20) into the insertion opening (12).

3. Drinks container holder according to claim 1, **characterised in that** the drinks container holder (10) comprises several diameter-compensating elements (14) and for each diameter-compensating element (14), a separate spring element (20), which pivots the respective diameter-compensating element (14) into the insertion opening (12).

4. Drinks container holder according to claim 1, **characterised in that** the spring element (20) is a leaf spring.

5. Drinks container holder according to claim 2, **characterised in that** the spring element (20) is ring-shaped and surrounds the diameter-compensating elements (14).

## Revendications

1. Support de boisson pour une bouteille profilée, comprenant une ouverture pour y déposer la bouteille, un élément de compensation du diamètre pivotant pouvant être rabattu à l'intérieur de l'ouverture et un élément a ressort qui rabat l'élément de compensation du diamètre dans l'ouverture, **caractérisé en ce que** l'élément de compensation du diamètre (14) peut pivoter vers le bas et simultanément vers l'extérieur, et vers le haut et simultanément vers l'extérieur.

2. Support de boisson selon la revendication 1, **caractérisé en ce que** le support de boisson (10) présente plusieurs éléments de compensation du diamètre (14) qui sont rabattus dans l'ouverture (12) par un élément à ressort (20) commun.

3. Support de boisson selon la revendication 1, **caractérisé en ce que** le support de boisson (10) présente plusieurs éléments de compensation du diamètre (14) et un élément à ressort (20) propre à chaque élément de compensation du diamètre (14), qui rabat chaque fois l'élément de compensation du diamètre (14) dans l'ouverture (12).

4. Support de boisson selon la revendication 1, **caractérisé en ce que** l'élément à ressort (20) est un ressort à lame.

5. Support de boisson selon la revendication 2, **caractérisé en ce que** l'élément à ressort (20) a une forme annulaire et entoure les éléments de compensation du diamètre (14).
